# EUROPEAN PATENT APPLICATION

(11) **EP 4 480 875 A2**
(43) Date of publication of application: **25.12.2024**
(21) Application number: 23712303.9
(22) Date of filing: 16.02.2023
(51) Int. Cl.: B65H 29/54, B26D 5/00, B26D 7/18

(54) **DEVICE FOR HANDLING ADJACENT SHEET ELEMENTS**

(30) Priority: 17.02.2022 EP 22382130
(71) Applicant: Open Mind Ventures, S.L.U., 08700 Igualada Barcelona (ES)
(72) Inventor: BALSELLS MERCADE, Antoni, 08700 Igualada (Barcelona) (ES); GUIMERÀ PEDROLA, Antoni, 08700 Igualada (Barcelona) (ES); CARRER VIVES, Josep María, 08700 Igualada (Barcelona) (ES); BALSELLS VIVES, Bernat, 08700 Igualada (Barcelona) (ES)
(74) Representative: Herrero & Asociados, S.L.
(86) International application number: PCT/ES2023/070085
(87) International publication number: WO 2023/156699

(57) **Abstract**

The device for handling adjacent sheet elements comprises a clamp (2) for gripping a sheet element (10) and a capture head (1) which is provided with clamping means (4), which separates, grips and lifts an edge of a sheet element (10). The capture head/s (1) is/are rotatable about a longitudinal axis (3).

It allows the handling of sheet elements consisting of one or more layers of sheet material, allowing the clamp to slide along the surface supporting the elements to access the underside of the sheet element, thus capturing the elements on the same surface that has been used to cut them.

## Description

### Field of the invention

The present invention relates to a device for handling adjacent sheet elements, in particular sheet elements which are placed adjacent to each other and separated by a cut, i.e. with no or minimal separation, negligible for handling purposes. Furthermore, the cuts may have any type of geometry, whether straight or curved, with closed angles so that one piece may be wholly or partially enclosed within another.

### Background of the invention

The preparation of a sheet element for processing, such as a cut piece of fabric or leather, sheets for printing or metal foils for stamping, may require the manipulation, such as removal, of individual sheet elements and their separation from adjoining sheet elements.

Several devices are known for handling adjacent laminar materials. Mostly these are systems that capture the sheet element from its top face using, for example, mechanical systems, such as static gripper fingers, or through vacuum systems, such as suction cups, sharp elements, such as inclined needles, among others. These systems move in conjunction with a head.

Some drawbacks of these current systems prevent their use in a multitude of applications. For example, suction cups have the disadvantage of being difficult to capture breathable or porous surfaces, with a transport speed limited by the suction capacity and the air resistance (sail effect) of the surface of the collected sheet element (which can be large) to displacement.

The traditional handling of sheet elements with access to the sheet element only from the top face (using finger grippers) wrinkles the fabric and is not suitable for delicate products.

Systems based on puncturing elements can only be used on certain materials, as they cause visual and functional defects in the sheet element.

Current systems have limitations, as they may crease, mark or damage the sheet element.

When these sheet elements are adjacent to each other and are only separated by a cutting slot, it is very difficult to access this slot in order to capture and manipulate them without affecting the adjacent sheet elements. In terms of automation, it is also very difficult to detect, with artificial vision, the location of these cuts, since, as the material is homogeneous and the cuts are very fine, the sensors have great difficulty, if not impossibility, to detect them.

Existing grippers do not allow access through this very small cutting slot and can therefore only access the underside of one or more sheet elements in areas where there is no adjacent sheet element or stack, which limits the degrees of freedom in the order of handling and therefore the possibility of more efficient handling in the right order.

Therefore, there is still a need for a handling device for adjacent sheet elements which allows the handling of adjacent sheet elements also through small gaps, such as the cutting slots generated after longitudinal cutting of the sheet elements.

Other major drawbacks of the current systems are storage and transport to the next production stages.

Currently, these cut sheet elements, once captured, are deposited in trays, containers, boxes, shelves, or other elements that are difficult to handle later.

As a consequence, the laminar materials can become wrinkled, or separated from the group, and as a consequence of this storage, the selection of each element to be reprocessed requires a lot of attention from the operator, as different elements of the same sheet element are often placed in the same container.

European patent application EP21383181, by the same applicant as the present application and not published at the filing date of the present application, describes a system for sorting objects comprising a modular conveyor belt made, for example, of elastic bristle polymer brushes, foam, a carpet, or the like.

### Description of the invention

The device for handling adjacent sheet elements according to the present invention is defined in claim 1, and it comprises a gripping clamp for gripping a sheet element and a capture head which is provided with clamping means, which clamps and lifts an edge of a sheet element.

Advantageously, the capture head is rotatable around a longitudinal axis, which preferably is horizontal and centered on said capture head. It could also be multiple contiguous heads along an axis, which work in coordination.

According to alternative embodiments, the clamping means are chosen, depending on the type of sheet element, from the group comprising:
- one or more air suction elements;
- one or more air release elements;
- one or more adhesive elements;
- one or more friction lifting elements;
- one or more pressure application elements; and/or
- one or more scraping elements.

These alternative embodiments, which can be arranged and combined with each other, can also be implemented on both adjacent sheet elements, i.e., on the material to be captured and on the sheet element which does not move and after the capture of the adjacent part continues to rest on the cutting or support surface.

Advantageously, in the embodiment with scrapping elements as clamping means, the scrapping elements can perform sequences of movements, such as, for example, a back-and-forth movement or a vibrating movement to separate the adjacent sheet elements and position themselves under the sheet element to be captured, or a separating movement to tension the sheet element to be captured for better insertion of the gripping clamp.

It should be noted that, according to the present application, the type of supporting surface can be any type of surface, not limited to the fact that it has to consist of elastic bristles, carpet, foam or the like.

In addition, the gripping clamp advantageously comprises an identification element, such as a RFID tag, a graphic code (barcode, QR) or similar.

The device for handling adjacent sheet elements according to the present invention may also comprise a feeder of gripping clamps, a camera or similar detection sensor, which detects a gap between adjacent sheet elements in certain circumstances, in order to favor the precision of the object capture, or positioning marks made during cutting, by means of visible ink printing or invisible ink (e.g. only visible by UV) or the application of printed or unprinted stickers of various shapes or colors which are conveniently positioned to promote the accuracy of object capture, and/or a reader/writer of the identification element of the clamp.

In order to open the gripping clamp, the device according to the present invention also comprises a clamp actuating element, the position of which determines whether the clamp is open or closed, such as, for example, a swing arm. An alternative embodiment would be with a clamp which moves within a guide, and which, by means of a cam, can open and close in the displacement.

The device according to the present invention allows handling sheet elements formed by one or several layers of sheet element, allowing the clamp to slide along the surface supporting the elements to access the underside of the sheet element, thus capturing the elements on the same surface that has been used to cut them.

The device according to the present invention allows access and capture through the slot resulting from cutting the sheet element and allows a firm mechanical lateral clamping from this position, affecting only one or more ends, these areas being normally joint or seam areas, these areas being less visible, and are often even hidden in their further processing.

Another advantage is that it allows the insertion of different clamps on different edges of the contour of the cut sheet element, allowing a compensated and distributed capture, so that it can be properly positioned even in elements with a significant surface area and complex geometries, all without being dragged, colliding, etc., using a reduced space according to those used today by the industry, making this integration easier.

The device according to the present invention also solves one of the major drawbacks of current systems: storage and transport to the next production stages.

In addition, the device according to the present invention also allows for the incorporation of labels or temporary visual aids (projection) for identification and positioning in the capture.

Another novelty of the device according to the present invention is that the clamps inserted in the slot, apart from the capturing function, can contain tracking information, data regarding the captured element, subsequent industrial operations, safety warnings, etc. This data can be recorded during the industrial process with complementary information to identify the specific process.

A dynamic traceability system, such as an NFC tag, is incorporated into the clamp to limit human errors, providing real-time control, position, and updated status of each captured item.

Moreover, due to their morphology, the clamps can be easily picked up by a complementary system (automated or manual) and deposited in trays, containers, etc., or also positioned suspended, hanging in an automated or manual vertical storage system, incorporating them into the production cycle in a controlled manner in real time.

This suspended, post-cutting positioning system offers many advantages, as the suspended materials do not wrinkle, are highly visual, can be sorted sequentially, take up much less space, are less messy, and the automation of transport by means of overhead systems is a well-known and widely used technique.

### Description of the drawings

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1 is a plan view of an embodiment of the device for handling sheet elements according to the present invention;
Figures 2 to 5 are side elevation views of the device for handling sheet elements according to the present invention, showing the process of capturing a sheet element;
Figure 6 is a side view of an embodiment of the device for handling sheet elements according to the present invention in which a clamp feeder is included;
Figure 7 is a schematic side view of a device for handling sheet elements of the present invention, according to an alternative embodiment;
Figures 8 to 14 are side views of alternative embodiments of the capture head, which captures or lifts a sheet element;
Figures 15 and 16 are a perspective view and a side view of an embodiment of a capture head, with insertion of gripping clamps by means of guides and with scraping elements as clamping means.

### Description of a preferred embodiment of the invention

The object of the present invention is a device for handling adjacent sheet elements, such as single or multi-layer sheet elements, e.g., pieces of fabric, leather, etc., which are subjected to cutting processes, following patterns or geometries, etc., which are subjected to cutting processes, following patterns or geometries, which allow the capture, suspension, and displacement of such elements.

The device according to the present invention is configured to be able to access the underside of a sheet element, and thus to be able to proceed to the handling of sheet elements without the need to access only through free edges of such elements, but also through gaps or small longitudinal slots generated in cutting processes, thus overcoming the limitations of the present state of the art.

For this purpose, according to one embodiment, the device comprises one or more capture head(s) 1 for slightly separating or raising the edge of a cut sheet element 10 adjacent to another sheet element 10, and gripping said sheet element 10 by means of a gripping clamp 2 for handling.

For this purpose, alternative and variable sequences adapted to the type of sheet element 10 are carried out, which consist of temporarily fixing or separating in opposite direction the sheet elements in the area close to the slot or cut between two adjacent sheet elements 10 to prevent or force their displacement as required by the sheet element.

The edge between two adjacent sheet elements 10 is then lifted away from a cutting surface or support 11 and only this edge of the sheet element 10 to be gripped and handled is lifted, simultaneously or synchronously facilitating access to its underside through the gap or separation between two adjacent sheet elements 10.

Once the edge of the sheet element 10 is raised and separated from the support surface 11, the clamp 2 makes the sheet element 10 firmly fixed to this clamp 2 between the lower and upper face of the sheet element 10.

The separation or elevation, with respect to the support surface 11, of the sheet element 10 to be captured, is carried out by its edge, regardless of its geometry or surface.

The position of the sheet element 10 is preferably determined by means of, for example, a detection camera 7, in order to achieve the optimal positioning of the gripping clamp 2, whereby various criteria such as weight, geometry, surface, type of material, subsequent positioning can be used. To facilitate the precise position and capture point, it can be supplemented by visual aids projected or implemented on the surface of the sheet element 10 with, among others, stickers, powder markers, inks, etc.

The capture head 1 comprises clamping means 4, which are adapted to each type of material, and which create the necessary interaction with the sheet element 10. This interaction does not require the complete lifting of the sheet part 10, since its task is only to facilitate the gripping, in the edge area, by the gripping clamp 2 and, therefore, the entry of the sheet element 10 into the gripping clamp 2 and the subsequent closing of the gripping clamp 2.

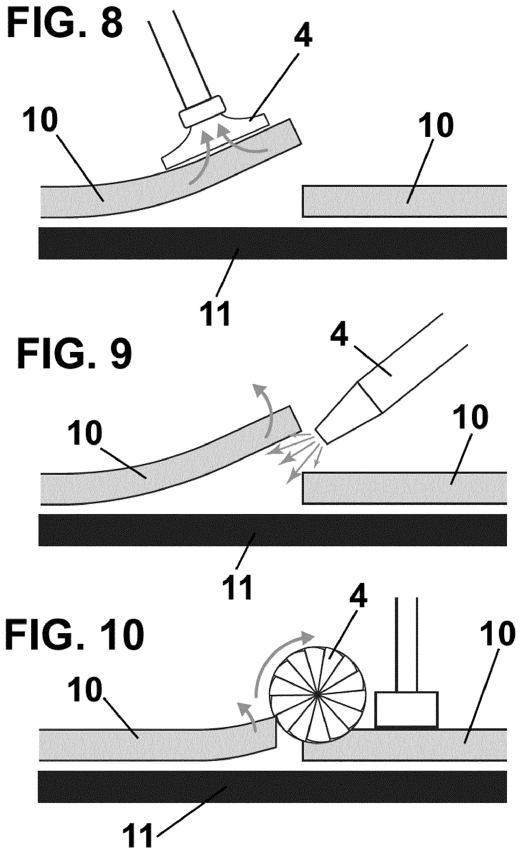

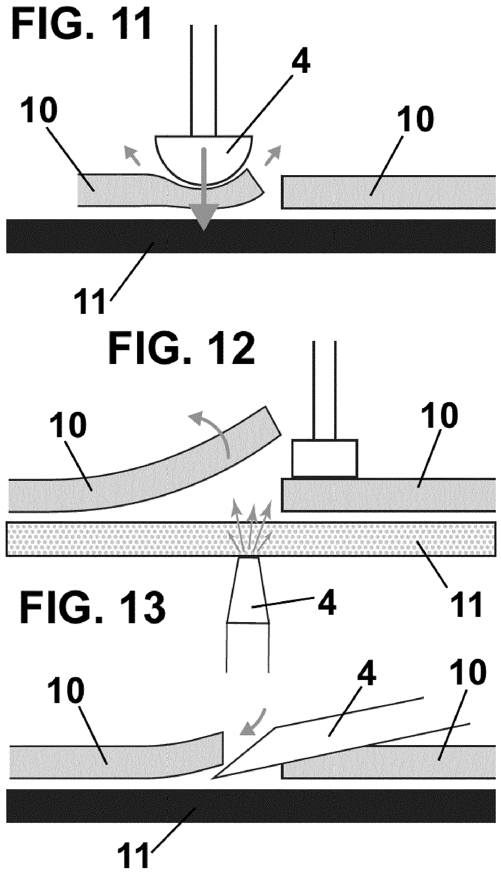

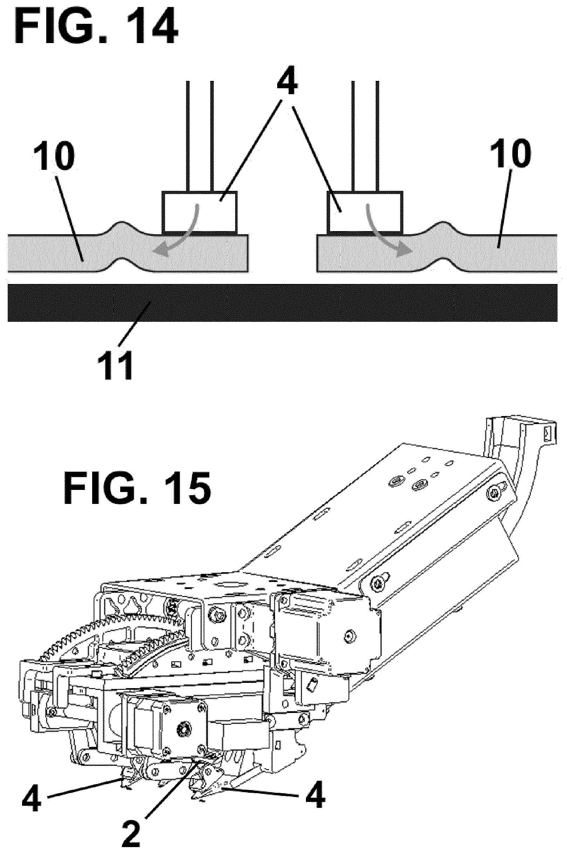

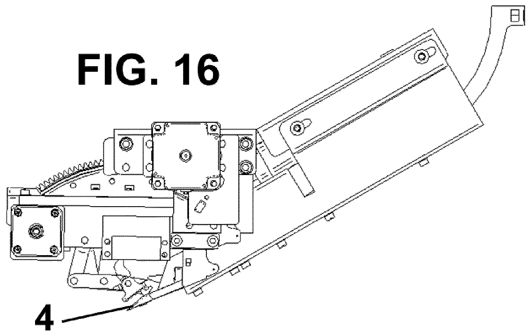

The clamping means 4 allowing the lifting of the sheet element 10 can be of different types or a combination of these, such as:
- temporary air suction elements (shown in Figure 8), e.g., Venturi, Bernoulli or vacuum suction cups;
- temporary air release elements (shown in Figures 9 and 12), which allow, for example, air to enter the slot from the upper side or to be lifted from the lower side;
- adhesive elements (shown in Figure 14), e.g., mechanical or by electro-bonding;
- friction lifting elements (shown in Figure 10), e.g., a roller with bristles;
- clamping elements (shown in figure 11) that support or deform the sheet elements 10 by applying pressure to raise their edge near the slot;
- scraping elements (shown in Figure 13 and Figures 15 and 16), for example, of a scraper or comb type, such as flexible microteeth, which are inserted through the slot or cut between two adjacent sheet elements and move perpendicular to the cut line towards the inside of the element to be captured by scraping the support surface 11 to separate the sheet element 10. These scraping elements may be capable of performing movements such as vibration or back and forth, to facilitate penetration, and separation movements to tension the sheet element 10 and facilitate insertion of the gripping clamp 2.

In order for the gripping clamp 2 to open at the appropriate time when the edge of the sheet element 10 is raised, or to assist this separation as appropriate, the device according to the present invention also comprises an actuating element 9 which actuates said gripping clamp 2, and whose position determines whether the gripping clamp 2 is open or closed.

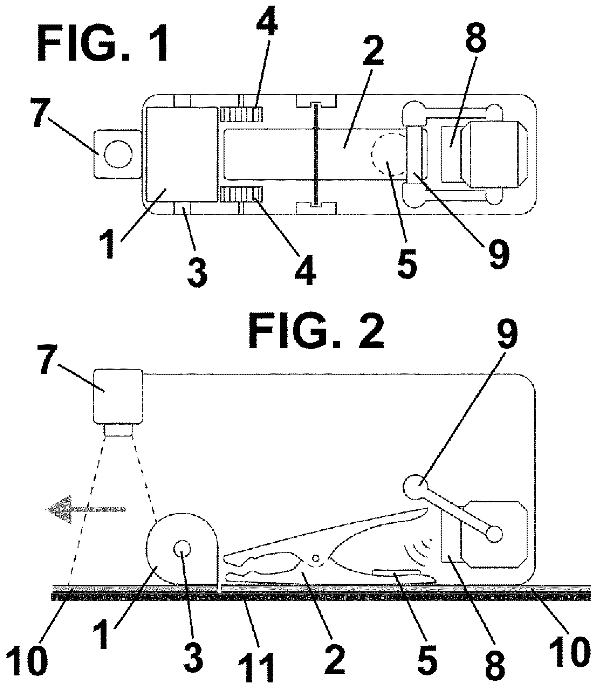

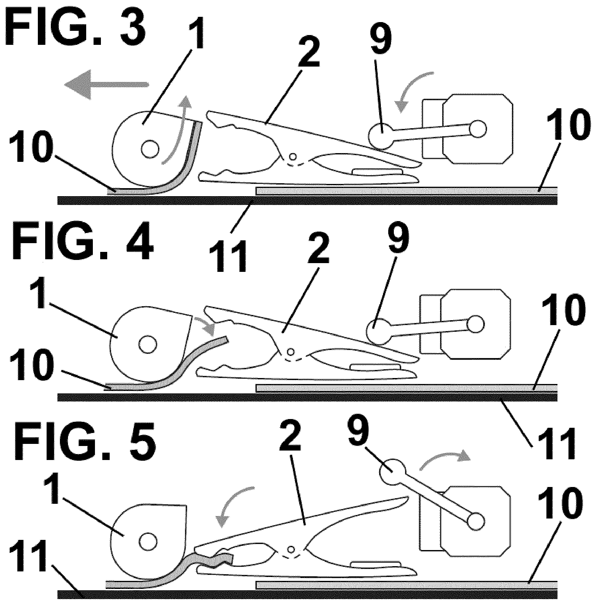

According to the embodiment depicted in figures 2 to 6, the actuating element 9 of the clamp 2 comprises a swing arm, which is in contact with and presses the clamp 2 to open it (figures 3 and 4), and when it is no longer in contact with the clamp 2 (figures 2 and 5), the clamp 2 automatically returns to its closed position. This representation is not mutually exclusive, as the clamp could be operated in many different ways.

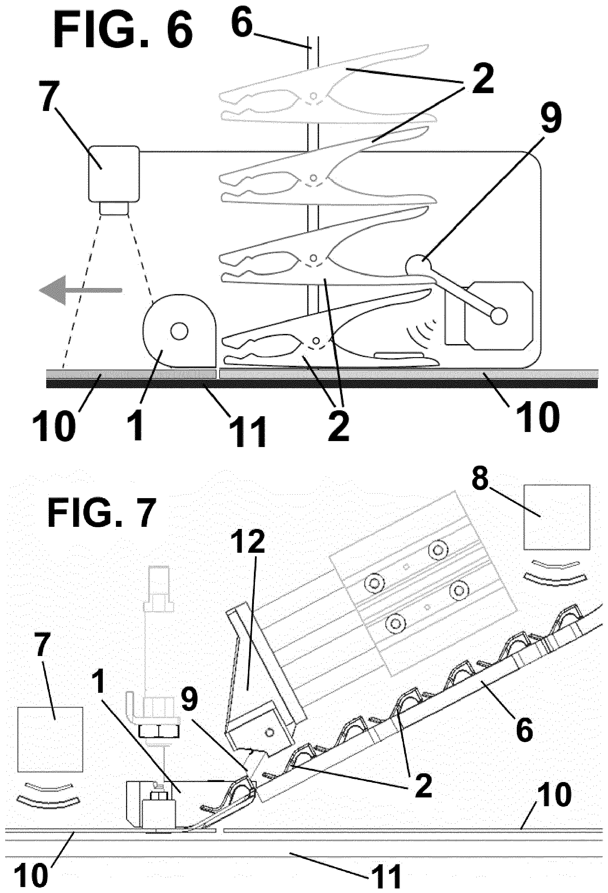

According to the embodiment shown in Figures 7, 15 and 16, the actuating element 9 of the clamp 2 comprises ramped guides that open the clamp 2 as it moves along the guide, closing as it exits the guide.

To facilitate identification throughout the process, the clamp(s) 2 comprises an identification element 5, such as, for example, an RFID tag or similar, and the device comprises a reader/writer 8, which reads the information from the identification element 5 of the clamp 2.

The gripping clamps 2 can be dispensed in an automated manner, for example by means of a feeder 6, comprising a rod (figure 6) or an inclined surface and an insertion element 12 of the clamps (figure 7). This embodiment is not exclusive as other clamp dispensing systems may be available.

This can increase productivity on certain sheet elements, where the frequency and density of clamps is high or the lifting and subsequent gripping process is slower due to the type of sheet element, as it allows multiple actions in parallel.

In this case, the clamp 2 is designed so that a vision system can place the automatic pick-up coordinates and have them captured, together with the sheet element 10, through anchors (not shown) that can be incorporated into the device, such as hooks, rings and interlocking elements.

The device according to the present invention allows for different modes of operation at the time of gripping or holding and subsequent positioning:
In optimal operation, the gripping clamps 2 work together with the capture head 1 and are not released until the sheet element 10 has been unloaded at the defined location. The use of multiple clamps 2, in optimal operation, allows for increased productivity as the loading and unloading functions can be performed simultaneously.

A classical embodiment is also possible in which the same clamp 2 is used for the different captures, loading, and unloading the grasped sheet elements sequentially, so that no additional clamps 2 are needed, but they are more time-consuming, as these loading and unloading functions cannot work in parallel. This is suitable for working with conventional anthropomorphic robots.

In addition, in optimal operation, a balanced capture of sheet elements, especially those with complex geometry or a large surface area, is possible, as the clamps 2 can be placed in positions that allow for a suspended transport or a balanced arrangement.

Due to their morphology, the clamps 2 can be easily picked up by a complementary system (automated or manual) and could be deposited on elements such as trays, containers, etc., or also positioned suspended, hanging in an automated or manual vertical storage and transport system, as they incorporate into their design suitable anchorages for this purpose, such as hooks, rings, or magnets. This allows them to be incorporated into the production cycle in a controlled manner in real time.

This suspended, post-cutting positioning system offers multiple advantages, as the suspended materials do not wrinkle, are highly visual and can be arranged sequentially, taking up much less space.

Furthermore, in optimal operation, the gripping clamp 2 can be released from a robotic arm, so that it is temporarily attached to the sheet element 10, facilitating identification and subsequent collection, also allowing traceability of the captured sheet elements 10 as the clamps have the possibility of incorporating reading and wireless communication technologies.

In both modes, with single or multiple clamps, the system also allows capturing the sheet element 10 from a lateral free space, without the need to access through the cutting slot.

In one embodiment, there may be different capture heads 1 working simultaneously in a coordinated manner. One could even consider the case where multiple capture heads 1 are arranged across the entire width of the sheet element 10 and thus reduce the displacements of the capture heads 1.

In one possible embodiment, the device is part of an overall system that can work in different interrelated or consecutive modules.

Although reference has been made to a specific embodiment of the invention, it is obvious to a person skilled in the art that the device for handling adjacent sheet elements described is susceptible to numerous variations and modifications, and that all the details mentioned can be replaced by technically equivalent ones, without departing from the scope of protection defined by the appended claims.

## Claims

1. Device for handling adjacent sheet elements, comprising a clamp (2) for gripping a sheet element (10), **characterized in that** it comprises a capture head (1) which is provided with clamping means (4), which separate, grip and lift an edge of a sheet element (10).

2. Device for handling adjacent sheet elements according to claim 1, wherein the capture head/s (1) is/are rotatable about a longitudinal axis (3).

3. Device for handling adjacent sheet elements according to claim 1, wherein the clamping means (4) are selected from the group comprising:
- one or more air suction elements;
- one or more air release elements;
- one or more adhesive elements;
- one or more friction lifting elements;
- one or more pressure application elements; and/or
- one or more scraping elements.

4. Device for handling adjacent sheet elements according to claim 1, wherein the clamp (2) comprises an identification element (5).

5. Device for handling adjacent sheet elements according to any one of the preceding claims, also comprising a feeder (6) for gripping clamps (1).

6. Device for handling adjacent sheet elements according to any one of the preceding claims, also comprising a camera or other detection sensor (7), which detects a gap between adjacent sheet elements (10).

7. Device for handling adjacent sheet elements according to claim 4, also comprising a reader/writer (8) of the identification element (5) of the gripping clamp (2).

8. Device for handling adjacent sheet elements according to any one of the preceding claims, also comprising an actuating element (9) of the gripping clamp (2), the position of which determines whether the gripping clamp (2) is open or closed.

9. Device for handling adjacent sheet elements according to any one of the preceding claims, wherein the clamping means (4) are movable and/or vibrating.

10. Device for handling adjacent sheet elements according to claim 9, wherein the clamping means (4) move in a reciprocating motion.
